# EUROPÄISCHE PATENTSCHRIFT

(11) **EP 4 217 807 B1**
(45) Veröffentlichungstag und Bekanntmachung des Hinweises auf die Patenterteilung: **30.10.2024**
(21) Anmeldenummer: 21787310.8
(22) Anmeldetag: 22.09.2021
(51) Int. Cl.: G05B 19/418, B60L 13/03, B60L 15/38, B60L 13/08, B65G 54/02

(54) **ELEKTROMAGNETISCHES TRANSPORTSYSTEM**
ELECTROMAGNETIC TRANSPORT SYSTEM
SYSTÈME DE TRANSPORT ÉLECTROMAGNÉTIQUE

(30) Priorität: 22.09.2020 AT 508032020
(43) Veröffentlichungstag der Anmeldung: 02.08.2023
(73) Patentinhaber: B&R Industrial Automation GmbH, 5142 Eggelsberg (AT)
(72) Erfinder: FORTHUBER, Friedrich, 5142 Eggelsberg (AT); ROGNER, Philipp, 5142 Eggelsberg (AT); KASTINGER, Christian, 5142 Eggelsberg (AT)
(74) Vertreter: Patentanwälte Pinter & Weiss OG
(86) Internationale Anmeldenummer: PCT/EP2021/076104
(87) Internationale Veröffentlichungsnummer: WO 2022/063848

(56) Entgegenhaltungen:
- US-A1- 2015 344 233
- US-A1- 2019 084 781

## Beschreibung

Die gegenständliche Erfindung betrifft ein Elektromagnetisches Transportsystem umfassend eine Anzahl Transporteinheiten, welche entlang einer Transportstrecke bewegbar angeordnet sind, wobei entlang der Transportstrecke Antriebsspulen angeordnet sind und an den Transporteinheiten Antriebsmagnete angeordnet sind, wobei die Transportstrecke in Transportabschnitte eingeteilt ist, die Transportabschnitte jeweils mindestens ein Transportsegment umfassen, wobei den Transportabschnitten jeweils eine Abschnittssteuerungseinheit zugeordnet ist und den Transportsegmenten jeweils ein Segmentregler zugeordnet ist. Weiters betrifft die gegenständliche Erfindung ein Verfahren zur Steuerung der Bewegung einer Anzahl Transporteinheiten, welche entlang einer Transportstrecke eines elektromagnetischen Transportsystems bewegbar angeordnet sind, wobei die Transportstrecke in Transportabschnitte eingeteilt ist und die Transportabschnitte jeweils mindestens ein Transportsegment umfassen.

Transportstrecken eines elektromagnetischen Transportsystems, wie eines Langstatorlinearmotors oder Planarmotors können auf eine Mehrzahl an Abschnitten aufgeteilt werden, wie beispielsweise von der EP 3 024 128 A1 in Bezug auf einen Langstatorlinearmotor offenbart. Die Abschnitte sind in Teilbereiche aufgeteilt, wobei pro Teilbereich ein Umrichter vorgesehen ist. Weiters ist den Abschnitten jeweils eine Steuereinheit zugeordnet, welche die Umrichter der zugehörigen Teilbereiche ansteuern, um die jeweiligen Teilbereiche mit Strom zu versorgen. Bei einer Übergabe einer Transporteinheit zwischen Abschnitten wird in der EP 3 024 128 A1 vorgeschlagen jene Steuereinheit, in dessen Bereich sich die Transporteinheit befindet, als Master festzulegen und die Steuereinheit, welche in Bewegungsrichtung liegt, als Slave festzulegen. Der Master plant die Bahn der Transporteinheit für den eigenen Teilbereich und den Teilbereich des Slaves. Hierzu steuert der Master den Slave über eine echtzeitfähige Schnittstelle. Es wird weiters vorgeschlagen eine übergeordnete Steuereinheit als Master vorzusehen, welche die Bahn der Transporteinheit plant und über eine weitere Schnittstelle die untergeordneten Steuereinheiten als Slaves steuert.

Aus der US 2015/344233 A1 ist ein elektromagnetisches Transportsystem mit Transporteinheiten bekannt, welche entlang einer Transportstrecke bewegt werden. Das Transportsystem ist dabei in Zonen mit zugehörigen Zonenkontrolleinheiten unterteilt ist, welche jeweils die Transportstrecke der jeweiligen Zone und die Transporteinheiten in der jeweiligen Zone überwachen und steuern. Die Zonenkontrolleinheiten können z.B. via Ethernet mit weiteren Einheiten (z.B. einem PLC, Netzwerk- und/oder Softwaremodulen) verbunden sein und von diesen Anweisungen für die Transporteinheiten in der Zone erhalten.

Die US 2019/084781 A1 zeigt ebenfalls ein elektromagnetisches Transportsystem mit Transporteinheiten, bei welchem die Transportstrecke in Segmente unterteilt ist und die Segmente Segmentsteuereinheiten aufweisen, um das Transportsystem für eine gewünschte Bewegung im jeweiligen Segment der Transportstrecke ansteuern. Die Segmentsteuereinheiten kommunizieren dazu mit den jeweils benachbarten Segmentsteuereinheiten und einer zentralen Steuereinheit über ein Netzwerk, wobei die zentrale Steuereinheit weiterhin über das Netzwerk mit einer Industriesteuerung verbunden ist, welche z.B. für jede Transporteinheit gewünschte Positionen vorgibt, welche an die zentrale Steuereinheit übertragen und von dieser in Form von Kommandos für die Segmentsteuereinheiten umgesetzt werden.

Es ist eine Aufgabe der gegenständlichen Erfindung ein elektromagnetisches Transportsystem anzugeben, welches in einfacher Weise erweiterbar ist.

Diese Aufgabe wird erfindungsgemäß gelöst, indem eine Logistikeinheit vorgesehen ist, welche über ein Logistiknetzwerk mit den Abschnittssteuerungseinheiten verbunden ist, und ausgestaltet ist, den Abschnittssteuerungseinheiten über das Logistiknetzwerk ein Ziel der Anzahl Transporteinheiten vorzugeben, wobei die Abschnittssteuerungseinheiten der Transportabschnitte über ein Segmentnetzwerk mit den Segmentreglern der zugehörigen Transportsegmente verbunden sind und ausgestaltet sind, aus dem Ziel für den zugehörigen Transportabschnitt einen Bahnabschnitt für die im zugehörigen Transportabschnitt befindlichen Transporteinheiten zu ermitteln, wobei ein Bahnabschnitt eine allgemeine Route von einem aktuellen Standort der Transporteinheiten zu einer Übergabeposition zwischen benachbarten Transportabschnitten und/oder dem Ziel beschreibt, unter Verwendung des Bahnabschnitts Sollwerte für die im zugehörigen Transportabschnitt befindlichen Transporteinheiten zu ermitteln und die Sollwerte über das Segmentnetzwerk an die zugehörigen Segmentregler zu übermitteln, wobei die Segmentregler ausgestaltet sind, unter Verwendung der Sollwerte und auftretender Istwerte die Antriebsspulen zu bestromen, um ein mit den Antriebsmagneten der Transporteinheiten wechselwirkendes Magnetfeld zu erzeugen, um die Anzahl Transporteinheiten zu bewegen. Weiters wird die Aufgabe durch ein Verfahren gelöst, wobei den Transportabschnitten zugeordneten Abschnittssteuerungseinheiten von einer Logistikeinheit über ein Logistiknetzwerk jeweils ein Ziel der Anzahl Transporteinheiten vorgegeben wird, wobei die Abschnittssteuerungseinheiten für die Anzahl Transporteinheiten aus dem zugehörigen Ziel für den jeweils zugeordneten Transportabschnitt jeweils einen Bahnabschnitt für die im zugeordneten Transportabschnitt befindlichen Transporteinheiten ermitteln, wobei ein Bahnabschnitt eine allgemeine Route von einem aktuellen Standort der jeweiligen Transporteinheit zu einer Übergabeposition zwischen benachbarten Transportabschnitten und/oder dem Ziel beschreibt, aus den Bahnabschnitten Sollwerte für die im zugeordneten Transportabschnitt befindlichen Transporteinheiten ermitteln, und diese über ein Segmentnetzwerk an Segmentregler der zugehörigen Segmente übermitteln und wobei die Segmentregler unter Verwendung der Sollwerte und bekannter Istwerte Antriebsspulen des Transportsegments bestromen, um ein mit Antriebsmagneten der Transporteinheiten wechselwirkendes Magnetfeld zu erzeugen, um die Anzahl Transporteinheiten zu bewegen.

Es können somit beliebig große Transportstrecken auf Transportabschnitte aufgeteilt werden, wobei pro Transportabschnitt eine Abschnittssteuereinheit vorgesehen ist. Es erfolgt daher keine Planung der gesamten Bahn der Transporteinheit an einer zentralen Stelle und auch keine Planung von Bahnabschnitten zweier benachbarter Transportabschnitte auf einer Einheit, sondern eine Planung eines Bahnabschnitts pro Transportabschnitt. Somit kann die Bahn der Transporteinheit in kleine Bahnabschnitte aufgeteilt werden, welche von den jeweiligen Abschnittssteuereinheiten berechnet wird. Damit müssen diese jeweils weniger Rechenleistung aufbringen, als bei einer zentralen Bahnplanung oder bei einer Master-Slave Bahnplanung. Erfindungsgemäß können auf einfache und kostengünstige Weise auch Langstatorlinearmotoren mit langen Transportstrecken (und damit langen Routen und somit langen - in Bahnabschnitte aufgeteilte - Bahnen) aufgebaut werden. Die Bahn beschreibt die allgemeine Route vom aktuellen Standort der Transporteinheit zum Ziel. Ein Bahnabschnitt beschreibt die allgemeine Route vom aktuellen Standort zur Übergabeposition - sofern das Ziel außerhalb des Transportabschnitts liegt. Bei der Planung der Bahn werden jedoch keine Werte für Position, Geschwindigkeit, Beschleunigung, keine weiteren physikalischen Effekte wie Massen, Kräfte, etc. berücksichtigt.

Die Sollwerte hingegen beschreiben die Kinetik der Transporteinheit entlang der Bahn und können somit beispielsweise die vorgesehene Soll-Position, Soll-Geschwindigkeit, Soll-Beschleunigung umfassen und weitere physikalische Effekte berücksichtigen. Der zeitliche Verlauf der Bewegung der Transporteinheit ergibt sich somit aus dem zeitlichen Verlauf der Sollwerte (und der entsprechenden Regelung der Istwerte). Bei der Bestimmung der Sollwerte können auch vorgegebene Grenzwerte (Maximalwerte) berücksichtigt werden.

Weiters ist es aufgrund des modularen Aufbaus möglich, die Transportstrecke in einfacher Weise durch weitere Transportabschnitte und zugehörige Abschnittssteuereinheiten zu erweitern. Die übergeordnete Logistikeinheit gibt den Abschnittssteuereinheiten über ein Logistiknetzwerk das Ziel der Anzahl Transporteinheiten vor. Das Ziel kann auch von einem Betriebsparameter der betreffenden Transporteinheit abhängig sein, so kann das Ziel beispielsweise je nach Betriebsparameter variieren. Ebenso können durch die Logistikeinheit weitere durch die Transporteinheit durchzuführende Prozessschritte vorgegeben werden.

Das Ziel einer Transporteinheit ist nicht zu verwechseln mit der Bahn einer Transporteinheit, da die Bahn nicht nur das Ziel, sondern die Route der Transporteinheit beschreibt. Ist das Ziel, über unterschiedliche Transportabschnitte erreichbar, so kann die Logistikeinheit zusätzlich zum Ziel vorgegeben, welche der Transportabschnitte zu durchlaufen sind, ohne jedoch die Bahn selbst zu beschreiben. Damit beschreibt die Logistikeinheit neben dem Ziel gewissermaßen auch Meilensteine in Form von zu durchlaufenden Transportabschnitten.

Ist in einem Transportabschnitt eine Verzweigung vorgesehen, so kann (sofern dies nicht von der Logistikeinheit vorgegeben ist) auch die zugehörige Abschnittssteuereinheit entscheiden, welche Abzweigung zu verwenden ist. Sind innerhalb eines Transportabschnitts mehrere parallele Wege in Richtung des Ziels möglich, so kann die Abschnittssteuerungseinheit ebenso entscheiden, welcher Weg verwendet werden soll.

Vorzugsweise sind an den Transportsegmenten Sensoren vorgesehen, um die Istwerte zu erfassen. Damit werden die Istwerte an den Segmenten gemessen und dem Segmentregler zur Verfügung gestellt.

Vorzugsweise umfassen die Istwerte Ist-Ströme und/oder Ist-Kräfte die am Transportsegment auftreten. Besonders vorzugsweise umfassen die Istwerte Ist-Positionen und/oder Ist-Geschwindigkeiten und/oder Ist-Beschleunigungen der der betreffenden Transporteinheit. Vorzugsweise umfassen die Sollwerte Soll-Ströme und/oder Soll-Kräfte für das Transportsegment und/oder Soll-Positionen und/oder Soll-Geschwindigkeiten und/oder Soll-Beschleunigungen für die betreffende Transporteinheit.

Vorteilhafterweise sind die Abschnittssteuerungseinheiten über ein Abschnittsnetzwerk miteinander verbunden und ausgestaltet sind über das Abschnittsnetzwerk Daten, vorzugsweise Ist-Werte zu übertragen. Ist beispielsweise vorgesehen eine Transporteinheit von einem ersten Transportabschnitt zu einem anderen, benachbarten, zweiten Transportabschnitt zu übergeben, so kann die Abschnittssteuerungseinheiten des ersten Transportabschnitts Daten an den die Abschnittssteuerungseinheit des zweiten Transportabschnitts übertragen, um eine verbesserte Übernahme und Übernahme der Transporteinheit zu ermöglichen.

Es können Segmentregler über das Segmentnetzwerk Istwerte an die Abschnittssteuerungseinheiten) übermitteln und die Abschnittssteuerungseinheiten über ein Abschnittsnetzwerk Istwerte übermitteln. Damit erhalten die Abschnittssteuerungseinheiten Kenntnis über Istwerte außerhalb ihres Transportabschnitts und können sich beispielsweise auf eintreffende Transporteinheiten und deren Übernahme vorbereiten.

Durch die Aufteilung auf mehrere Netzwerke kann zudem die Zykluszeit der einzelnen Netzwerke reduziert werden, womit weiters die Netzwerkauslastung reduziert wird und womit schnellere Prozesse realisiert werden können.

Das Abschnittsnetzwerk kann als Echtzeit-Netzwerk oder Punkt-zu-Punkt-Netzwerk ausgestaltet sein und vorzugsweise eine einstellbare Zykluszeit aufweisen. Das Abschnittsnetzwerk kann auch als andersartige analoge oder digitale Schnittstelle ausgestaltet sein.

Das Segmentnetzwerk kann als ein Echtzeit-Netzwerk oder Punkt-zu-Punkt-Netzwerk, ausgestaltet sein und vorzugsweise eine einstellbare Zykluszeit aufweisen. Das Segmentnetzwerk kann auch als andersartige analoge oder digitale Schnittstelle ausgestaltet sein.

Vorzugsweise ist das Logistiknetzwerk als nicht-echtzeitfähiges Netzwerk, vorzugsweise als Ethernet-Netzwerk, ausgestaltet. Da die Vorgabe des Ziels im Gegensatz zur Planung der Bahnabschnitte keine hohe Rechenleistung erfordert, ist für das Logistiknetzwerk keine so hohe Leistungsfähigkeit, wie für das Abschnittsnetzwerk und/oder Segmentnetzwerk erforderlich

Benachbarte Transportsegmente können überlappend ausgeführt sein, womit eine Redundanz erzeugt wird und weiters eine optimierte Übergabe von Transporteinheiten ermöglicht wird.

Die Transportabschnitte können jeweils zweidimensional und/oder eindimensional ausgeführt sein. Insbesondere kann das elektromagnetische Transportsystem als Langstatorlinearmotor, als Planarmotor oder als Kombination von Langstatorlinearmotor und Planarmotor ausgeführt sein, z.B. indem ein Teil der Transportabschnitte als Langstatorlinearmotor und ein anderer Teil der Transportabschnitte als Planarmotor ausgeführt ist.

Die Bahnabschnitte benachbarter Transportabschnitte können eine stetige Position und/oder /Geschwindigkeit und/oder Beschleunigung der Transporteinheit aufweisen, womit eine stetige Übergabe der Transporteinheit zwischen benachbarten Transportabschnitten erfolgen kann. Mit anderen Worten ergeben die Bahnabschnitte für eine Transporteinheit in Summe eine Bahn mit stetiger Position und/oder /Geschwindigkeit und/oder Beschleunigung der Transporteinheit

Die Segmentregler können Betriebsparameter und/oder Betriebsdaten der Transporteinheit an die zugehörigen Abschnittssteuerungseinheiten übermitteln, wobei die Abschnittssteuerungseinheiten die Betriebsparameter und/oder Betriebsdaten an die Logistikeinheit übermitteln können.

Vorzugsweise ermitteln die Abschnittssteuereinheiten den Bahnabschnitt unter Einhaltung von vorgegebenen Maximalwerten. Es können von den Abschnittsteuereinheiten auch direkt Sollwerte ermittelt werden, was wiederum unter Einhaltung von Maximalwerten erfolgen kann. Die Einhaltung von Maximalwerten kann analog zu einer zentral geplanten Bahn erfolgen, wobei im Rahmen der gegenständlichen Erfindung die Maximalwerte in Bezug auf Bahnabschnitte anstatt auf eine zentral geplante Bahn berücksichtigt werden.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 ein elektromagnetisches Transportsystem,
Fig.2 eine Aufteilung der Transportstrecke auf Transportabschnitte und eine Aufteilung der Transportabschnitte auf Transportsegmente,
Fig.3 eine Übermittlung von Istwerten von den Segmentreglern an die Abschnittssteuerungseinheit,
Fig.4 eine Übergabe von Istwerten von einer Abschnittssteuerungseinheit an eine benachbarte Abschnittssteuerungseinheit.

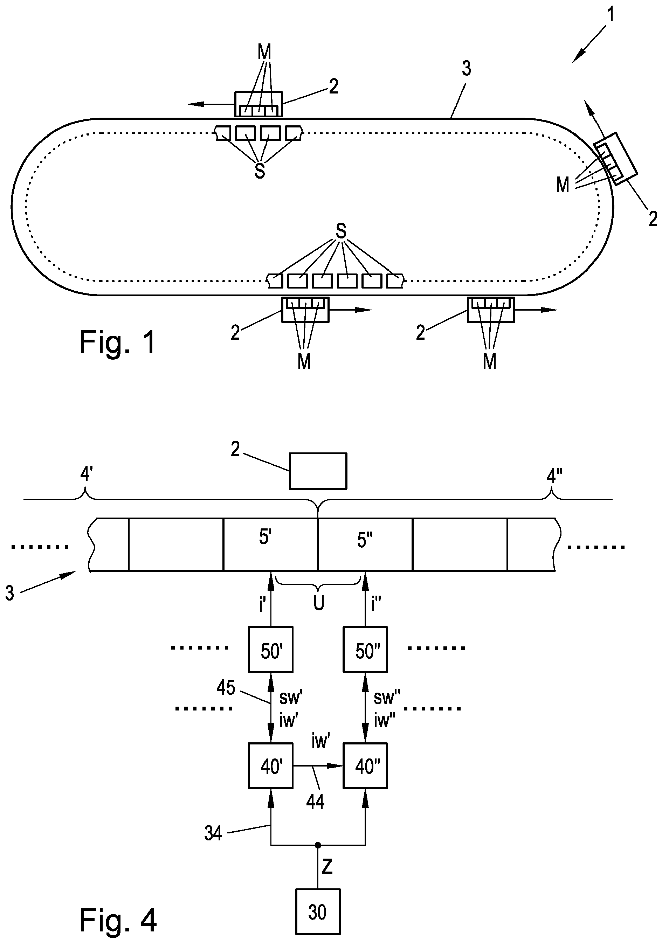

Fig. 1 stellt als elektromagnetisches Transportsystem 1 einen beispielhaften Langstatorlinearmotor 1 dar, welcher eine sehr einfache Transportstrecke 3 umfasst. Obgleich die Transportstrecke 3 hier lediglich eine geschlossene Schleife darstellt, sind natürlich auch beliebig verzweigte Transportstrecken 3 möglich. Es ist eine Anzahl Transporteinheiten 2 vorgesehen, welche entlang der Transportstrecke 1 beweglich angeordnet sind und hier nur beispielhaft im Uhrzeigersinn bewegt werden. Es sind entlang der Transportstrecke 3 Antriebsspulen S angeordnet, wogegen an den Transporteinheiten 2 Antriebsmagnete M angeordnet sind. Durch Bestromung der Antriebsspulen S wird ein entlang der Transportstrecke 3 bewegliches Magnetfeld erzeugt, welches mit den Antriebsmagneten M der Transporteinheiten 2 zusammenwirkt, um diese entlang der Transportstrecke 3 in Bewegung zu versetzen. Die Transportstrecke 3 kann, je nach Anwendung und Bedarf, beliebig geformt sein und kann geschlossene und/oder offene Streckenabschnitte umfassen. Die Transportstrecke 3 muss nicht in einer Ebene liegen, sondern kann auch beliebig im Raum geführt sein. Auch können zumindest über einen Teil der Transportstrecke 3 beidseitig oder mehrseitig Antriebsspulen S angeordnet sein. Gleichermaßen können an den Transporteinheiten 2 beidseitig oder mehrseitig Antriebsmagnete M angeordnet sein. Grundlegender Aufbau und Funktionsprinzip eines Langstatorlinearmotors sind hinlänglich bekannt, sodass hier nicht weiter darauf eingegangen wird.

Ebenso kann beispielsweise ein Planarmotor als elektromagnetisches Transportsystem 1 vorgesehen sein. Ein Planarmotor weist im Gegensatz zum Langstatorlinearmotor, welcher eine grundlegend eindimensionale Transportstrecke 3 aufweist, eine zweidimensionale Transportstrecke 3 auf und kann somit auch als Transportebene bezeichnet werden. Die Antriebsspulen S sind in der zweidimensionalen Transportstrecke 3 verteilt angeordnet, um ein Magnetfeld zu erzeugen, welches in der Transportstrecke 3 in zwei Dimensionen bewegt werden kann. Die Antriebsmagnete M sind vorteilhafterweise an der Transporteinheit 2 ebenso zweidimensional verteilt angeordnet um mit dem Magnetfeld zusammenwirken und die Transporteinheit 2 in der Transportstrecke 3 zu bewegen. Die Antriebsspulen S und die Antriebsmagnete M sind vorteilhafterweise derart angeordnet, dass neben einer eindimensionalen Bewegung entlang der von der Transportstrecke 3 aufgespannten Achsen (y-Achse und z-Achse in einer yz-Ebene) auch komplexere zweidimensionale Bewegungen der Transporteinheit in der Transportstrecke 3 möglich sind. Grundlegend ist es auch möglich, dass nur eine eindimensionale Bewegung in der zweidimensionalen Transportstrecke 3 vorgesehen ist. In diesem Fall können die Antriebsmagnete M und Antriebsspulen S auch lediglich eindimensional angeordnet sein. Auch die Funktionsweise und der Aufbau von Planarmotoren ist grundsätzlich bekannt, weshalb an dieser Stelle nicht näher darauf eingegangen wird.

Die gegenständliche Erfindung wird in Folge grundlegend in Bezug auf eine eindimensionale Transportstrecke 3, beschrieben, ist aber auch für andere elektromagnetische Transportsysteme mit zweidimensionalen Transportstrecken 3, wie beispielsweise Planarmotoren, gültig. Auch kann die elektromagnetische Transporteinheit 1 eine erste Anzahl Transportabschnitte 4 umfassen, die eindimensional sind, sowie eine zweite Anzahl Transportabschnitte 4 umfassen, die zweidimensional sind.

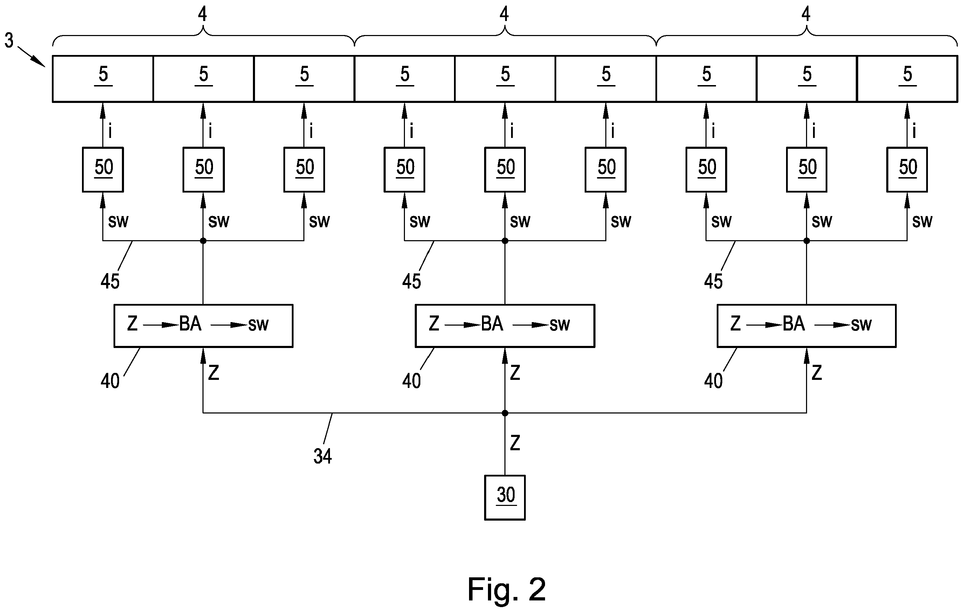

In Fig. 2 ist eine nur zum Zwecke der leichteren Darstellung ebene Transportstrecke 3 dargestellt, welche auf eine Mehrzahl (hier drei) an Transportabschnitten 4 aufgeteilt ist. Die Transportabschnitte 4 sind wiederum auf eine Anzahl (hier drei) an Transportsegmenten 5 aufgeteilt, wobei die Anzahl der Transportsegmente 5 zwischen den Transportabschnitten 4 variieren kann. Ein Transportabschnitt 4 kann auch verzweigte und/oder parallele Transportsegmente 5 umfassen. Die Transportsegmente 5 umfassen jeweils Antriebspulen S (in Fig. 2 aus Übersichtlichkeitsgründen nicht dargestellt), die von einem dem Transportsegment 5 zugehörigen Segmentregler 50 bestromt werden (jeweils als Spulenstrom i dargestellt), um ein entlang der Transportstrecke 3 wanderndes Magnetfeld zu erzeugen. Natürlich kann ein Transportsegment 5 auch mehr als eine Antriebsspule S umfassen. Die an den Transportsegmenten 5 auftretenden Istwerte iw sind dem Segmentregler 50 bekannt. Als Istwerte iw können beispielsweise die Ist-Position und/oder die Ist-Geschwindigkeit und/oder die Ist-Beschleunigung einer im zugehörigen Transortsegment 5 befindlichen Transporteinheit 2 und/oder im Transortsegment auftretende Ist-Ströme, Ist-Spannungen, Ist-Kräfte etc. erfasst werden. Hierzu können am Transportsegment 5 jeweils Sensoren, z.B. (magnetische) Positionssensoren zur Ermittlung der Ist-Position, vorgesehen sein. Die Segmentregler 50 bekommen Sollwerte sw vorgegeben, woraufhin Stellgrößen (z.B. der Spulenstrom i oder die Spulenspannung der Antriebsspulen S) vorgegeben werden, um die Istwerte iw an die Sollwerte sw anzupassen.

Ebenso können dem Segmentregler 50 Betriebsdaten und/oder Betriebsparameter wie Statusinformationen (Identifikationsnummer der Transporteinheit 2, Laufleistung der Transporteinheit 2, Wartungsdaten der Transporteinheit 2, Beladungszustand der Transporteinheit 2, Werkzeugnummer der Transporteinheit 2, Bearbeitungsreihenfolge, Daten zu einem an der Transporteinheit 2 geladenen Produkt etc.) bekannt sein.

Nach dem Stand der Technik ist für die Berechnung und Vorgabe der Gesamtbahn und damit von Sollwerten oftmals eine zentrale Bahnplanungseinheit vorgesehen, welche die Sollwerte an alle Segmentregler 50 übermittelt, um die gewünschte Bahn zu erzeugen.

Erfindungsgemäß ist den Transportabschnitten 4 jeweils eine Abschnittssteuerungseinheit 40 zugeordnet. Die Abschnittssteuerungseinheit 40 kann beispielsweise als speicherprogrammierte Steuerung (SPS, PLC) oder als Computer ausgeführt sein. Es ist eine zentrale Logistikeinheit 30 vorgesehen, welche den zugehörigen Abschnittssteuerungseinheiten 40 über ein Logistiknetzwerk 34 ein Ziel Z der Transporteinheiten 2 vorgibt. Zudem können den Abschnittssteuereinheiten 40 über das Logistiknetzwerk 34 von der Logistikeinheit 30 auch weitere Logistikfunktionen vorgegeben, werden, z.B. durchzuführende Aktionen wie Ladetätigkeiten etc. Diese Logistikfunktionen können auch abhängig von Betriebsdaten und/oder Betriebsparametern der jeweiligen Transporteinheit durchgeführt werden.

Ist das Ziel Z über mehrere Transportabschnitte 4 erreichbar, so kann die Logistikeinheit 30 den Transportabschnitten 4 vorgeben, von welchem Transportabschnitt 4 an welchen Transportabschnitt 4 die Transporteinheit 2 übergeben wird. Das Ziel Z der jeweiligen Transporteinheiten 2 kann auch abhängig der Betriebsparameter/Betriebsdaten, bestimmt werden. Damit kann eine Abschnittssteuerungseinheit 40 abhängig von zugehörigen Betriebsparametern/Betriebsdaten entscheiden an welchen Transportabschnitt eine Transporteinheit 2 zu übergeben ist, ohne dass die Logistikeinheit 30 eingreifen muss.

Die Logistikeinheit 30 steuert die Bewegung der Transporteinheiten 2, indem sie den Abschnittssteuereinheiten 40 das Ziel Z vorgibt.

Die Abschnittssteuerungseinheiten 40 ermitteln anhand dem von der Logistikeinheit 30 vorgegeben Ziel Z Bahnabschnitte BA der einzelnen Transporteinheiten 2, die sich innerhalb des zugehörigen Transportabschnitts 4 befinden. Der Bahnabschnitt BA entspricht einem Bewegungsprofil und kann bis zu einem benachbarten Transportabschnitt 4 reichen. Ab dem benachbarten Transportabschnitt 4 kann der zugehörige Bahnabschnitt BA wiederum von der zugehörigen Abschnittssteuerungseinheit 40 weiter geplant werden. Vorzugsweise kann ein stetiger Übergang der Bahnabschnitte BA zwischen benachbarten Transportabschnitten 4 vorgesehen sein. Anhand des Bahnabschnitts BA werden Sollwerte sw für im Transportabschnitt 4 befindliche Transporteinheiten 2 ermittelt und über ein Segmentnetzwerk 45 den zugehörigen Segmentreglern 50 übermittelt. Als Sollwerte sw können beispielsweise die Soll-Position und/oder die Soll-Geschwindigkeit und/oder die Soll-Beschleunigung für ein im zugehörigen Transportsegment 5 befindlichen Transporteinheit 2 und/oder Soll-Ströme, Soll-Kräfte etc. vorgegeben werden. Durch Vorgabe der Sollwerte sw im Transportabschnitt 4 kann somit der zugehörige Bahnabschnitt BA beschrieben werden.

Dabei ist zu beachten, dass die einzelnen Sollwerte sw in Fig. 2 obwohl sie das gleiche Bezugszeichen haben idR natürlich nicht identisch sind, sondern individuell von den Abschnittssteuerungseinheiten 40 ermittelt werden. Natürlich sind die Spulenströme i idR trotz identischem Bezugszeichen ebenso nicht identisch, sondern vielmehr von den jeweiligen Sollwerten sw abhängig. Das von der Logistikeinheit 3 vorgegebene Ziel Z ist jedoch grundlegend für alle Abschnittssteuerungseinheiten 40 einheitlich, wobei natürlich zwischen Zielen Z einzelner Transporteinheiten 2 unterscheiden werden kann.

Dadurch, dass nicht eine Gesamtbahn aus dem Ziel Z ermittelt werden muss, sondern anhand der Abschnittssteuereinheiten 40 jeweils lediglich Bahnabschnitte BA ermittelt werden, ist eine weitaus geringere Rechenleistung erforderlich, als bei einer Ermittlung der Gesamtbahn. Es wird also die Ermittlung der Bahn grundlegend auf eine Ermittlung von Bahnabschnitten BA aufgeteilt.

Vorzugsweise ist die Zykluszeit des Segmentnetzwerks 45 einstellbar und an die Größe des betreffenden Transportabschnitts 40 und die Anzahl der untergeordneten Transportsegmente anzupassen.

Es können von der Logistikeinheit 30 neben dem Ziel Z auch Logistikfunktionen vorgegeben werden, um weitere Prozessschritte vorzugeben. Diese Logistikfunktionen können beispielsweise in Form von Konfigurationen an die Abschnittssteuereinheiten 40 übergeben werden, welche dann bei der Berechnung des Bahnabschnitts BA der Transporteinheiten 2, z.B. abhängig von Betriebsparametern/Betriebsdaten, die Transporteinheiten 2 dazu anweisen können, die Logistikfunktionen durchzuführen.

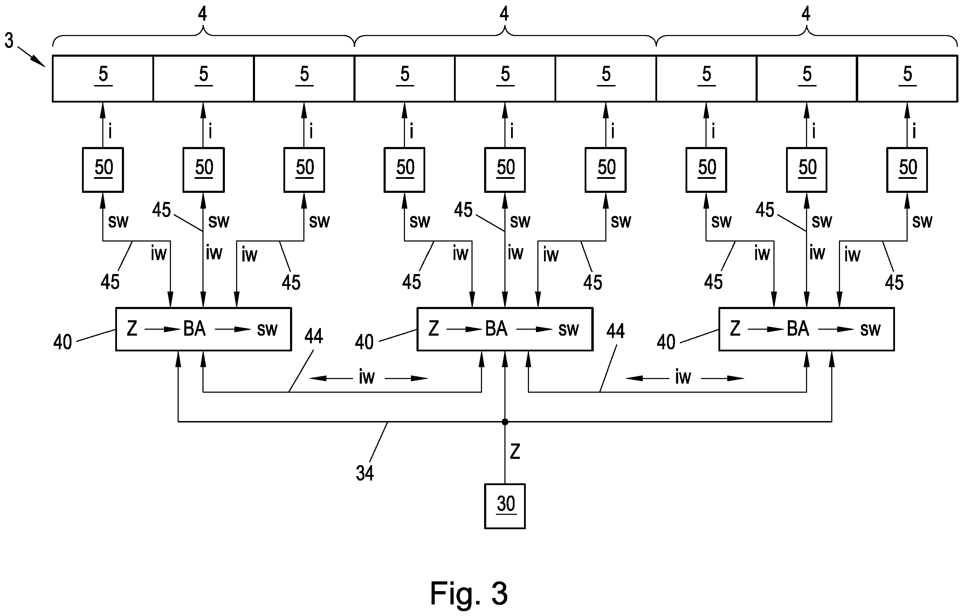

Es können, wie in Fig. 3 dargestellt, die Abschnittssteuereinheiten 40 über ein Abschnittsnetzwerk 44 miteinander verbunden sein, womit Daten zwischen den Abschnittssteuereinheiten 40 übergeben werden können. Als Daten können insbesondere Istwerte iw und/oder bekannte Betriebsdaten und/oder Betriebsparameter über das Abschnittsnetzwerk 44, insbesondere an benachbarte Abschnittssteuereinheiten 40 übertragen werden. Hierzu kann vorgesehen sein, dass über das Segmentnetzwerk 45 Istwerte iw und/oder bekannte Betriebsdaten und/oder Betriebsparameter von den Segmentsteuereinheiten 50 an die übergeordneten Abschnittssteuereinheiten 40 übertragen werden. Obgleich in Fig. 3 das Abschnittsnetzwerk 44, sowie die Segmentnetzwerke 45 als Einzelverbindungen dargestellt sind, können diese natürlich auch als Bus etc. ausgeführt sein.

Transporteinheiten 2 können entlang der Transportstrecke 3 bewegt werden, wobei auch unterschiedliche Transportabschnitte 2 passiert oder erreicht werden können. Somit erfolgt eine Übergabe der Transporteinheit 2 zwischen Transportabschnitten.

Insbesondere können Daten von einer Abschnittssteuereinheit 40, welche einem übergebenden Transportabschnitt 4 zugehörig ist, an eine Abschnittssteuereinheit 40, welche einem übernehmenden Transportabschnitt 4 zugehörig ist, übergeben werden, um eine sichere Übergabe und Übernahme der Transporteinheit 2 zu gewährleisten.

In Fig. 4 wird eine Übergabe einer Transporteinheit 2 von einem ersten Transportabschnitt 4' auf einen zweiten Transportabschnitt 4" dargestellt, wobei lediglich ein erstes Transportsegment 5' des ersten Transportabschnitts 4' und ein zweites Transportsegment 5" des zweiten Transportabschnitts 4" dargestellt sind. Die Transporteinheit 2 befindet sich in einem Übergabebereich U, welcher das erste und zweite Transportsegment 5', 5" und damit auch den ersten und zweiten Transportabschnitt 4', 4" überlappt. Dem ersten Transportabschnitt 4' ist eine erste Abschnittssteuereinheit 40' zugeordnet, welche mit einem dem ersten Transportsegment 5' zugeordneten ersten Segmentregler 50' über ein erstes Segmentnetzwerk 45' verbunden ist, dem zweiten Transportabschnitt 4" ist eine zweite Abschnittssteuereinheit 40" zugeordnet, welche mit einem dem zweiten Transportsegment 5" zugeordneten zweiten Segmentregler 50" über ein zweites Segmentnetzwerk 45" verbunden ist.

Die Transporteinheit 2 kann im Übergabebereich U von den Segmentreglern 50' 50" beider Transportabschnitte 4`, 4" oder anfangs vom ersten Segmentregler 50' und anschließend vom zweiten Segmentregler 50" angesteuert werden. In beiden Fällen kann die erste Abschnittssteuereinheit 4' auf Basis des Ziels Z den ersten Sollwert sw' ermitteln und an den ersten Segmentregler 50' übermitteln. Der Segmentregler 50' stellt dem Transportsegment 5 ausgehend vom erhaltenen ersten Sollwert sw' und einem vorliegenden ersten Istwert iw` (z.B. anhand von Sensoren ermittelt) eine Stellgröße zur Bestromung der Antriebsspule(n) des ersten Transportsegments 5' zur Verfügung. Hier ist ein erster Spulenstrom i' als Stellgröße vorgesehen, es sind aber auch andere Stellgrößen, wie beispielsweise Spulenspannungen etc. möglich). Sobald die Transporteinheit 2 den ersten Transportabschnitt 4' verlassen hat, kann die Berechnung des ersten Sollwerts sw' beendet werden.

Es kann vorgesehen sein, dass ein Istwert iw und/oder Betriebsdaten/Betriebsparameter vom ersten Transportabschnitt 4' an den zweiten Transportabschnitt 4" übergeben wird. Hierzu werden der Istwert iw 'und/oder Betriebsdaten/Betriebsparameter vom ersten Segmentregler 50' über das erste Segmentnetzwerk 45' an die erste Abschnittssteuereinheit 40' übermittelt, welche den Istwert iw' über das Abschnittsnetzwerk 44 an die zweite Abschnittssteuereinheit 40" überträgt.

Ist vorgesehen, dass im Übergabebereich U nur jeweils ein Segmentregler 50`, 50" die Transporteinheit 2 steuert, so kann der Wechsel des steuernden Segmentreglers 50`, 50" erfolgen, indem der erste Segmentregler 50' den ersten Istwert iw` an seine Abschnittssteuereinheit 40` übermittelt, welcher wiederum über ein Abschnittsnetzwerk 44 den ersten Istwert iw` an die zweite Abschnittssteuereinheit 40` übermittelt, welcher diesen auch an den zweiten Segmentregler 50" übermitteln kann. Da der erste Istwert iw` der zweiten Abschnittssteuereinheit 40" vorab bekannt ist, kann eine rasche Übergabe der Transporteinheit 2 auf den zweiten Transportabschnitt 4" erfolgen Es kann die zweite Abschnittssteuereinheit 40" den zweiten Sollwert sw" basierend auf dem ersten Istwert iw` vorab für die Übernahme der Transporteinheit 2 vorbereiten. Der zweite Transportregler 50" kann unter somit Verwendung des zweiten Sollwerts sw" die entsprechende Vorgabe der zweiten Stellgröße (z.B. der zweite Spulenstrom i") vorbereiten, um den zweiten Istwert iw" dem zweiten Sollwert sw" anzupassen, und bei der Übergabe die zweite Stellgröße sofort vorgeben. In Folge wird der Bahnabschnitt BA von der zweiten Abschnittssteuereinheit 40" auf Basis des Ziels berechnet, der zweite Sollwert sw" ermittelt, dem zweiten Segmentregler 50" vorgegeben, welcher weiterhin die zweite Stellgröße vorgibt, um den zweiten Istwert iw" an den zweiten Sollwert sw" anzupassen.

Der Istwert iw` kann auf einen für das zweite Transportsegment 5" passenden Istwert iw" umgerechnet werden, sofern erforderlich. Dies kann auf der ersten Abschnittssteuereinheit 40' vor der eigentlichen Übergabe des Istwerts iw` über das Abschnittsnetzwerk 44 erfolgen oder auf der zweiten Abschnittssteuereinheit 40" nach dem Erhalt des Istwerts iw`.

Nach der erfolgten Übergabe kann der Bahnabschnitt BA in der ersten Abschnittssteuerungseinheit 40' gelöscht werden, da bereits in der zweiten Abschnittssteuerungseinheit 40" ein Bahnabschnitt BA erzeugt wurde. Dass eine Transporteinheit 2 auf den zweiten Transportabschnitt 4" eintrifft, kann der zweiten Abschnittssteuerungseinheit 40" über das Logistiknetzwerk 34 von der Logistikeinheit 30 und/oder über das Abschnittsnetzwerk 44 von der ersten Abschnittssteuerungseinheit 40' mitgeteilt werden. Damit kann die zweite Abschnittssteuerungseinheit 40" sich auf den Empfang der Transporteinheit 2 vorbereiten. Zudem kann der zweiten Abschnittssteuerungseinheit 40" über das Logistiknetzwerk 34 von der Logistikeinheit 30 und/oder über das Abschnittsnetzwerk 44 von der ersten Abschnittssteuerungseinheit 40' die Position und/oder Geschwindigkeit der eintreffenden Transporteinheit 2 übermittelt werden.

Ist im Übergabebereich U vorgesehen, dass zumindest teilweise sowohl der erste Segmentregler 50`, als auch der zweite Segmentregler 50" die Transporteinheit 2 steuert, so ist der zweiten Abschnittssteuereinheit 40" der zweite Istwert iw" natürlich bereits bekannt, womit dieser direkt den zweiten Bahnabschnitt BA und daraus den Sollwert sw" berechnen und an den zweiten Segmentregler 50" übermitteln kann. Wird zudem der Istwert iw` über das Abschnittsnetzwerk 44 an die zweite Abschnittssteuereinheit 40" übergeben und liegt der Istwert iw" des zweiten Segmentreglers 50" bereits an der zweiten Abschnittssteuereinheit 4" vor, so kann dies als redundante Information angesehen werden, womit beispielsweise Fehler detektiert werden können.

Die Transporteinheit 2 kann sich während der Übergabe im Stillstand befinden. Die Übergabe kann aber auch bei jeder beliebigen Geschwindigkeit der Transporteinheit 2 erfolgen.

Befindet sich im Übergabebereich U eine Verzweigung der Transportstrecke 3 (d.h. eine Weiche), so werden von den Antriebsspulen S der im Bereich der Verzweigung befindlichen Antriebssegmente 4 zusätzlich zu Vortriebskräften auch Kräfte in Querrichtung aufgebracht um die Transporteinheit 2 derart abzustoßen und/oder anzuziehen, dass die entsprechend des ermittelten Bahnabschnitts BA vorgesehene Abzweigung genommen wird.

Die Logistikeinheit 30 und/oder Abschnittssteuerungseinheiten 40 und/oder Segmentregler 50 können mikroprozessorbasierte Hardware umfassen, beispielsweise einen Computer oder Digitalen Signalprozessor (DSP), auf welchem entsprechende Software zur Durchführen der jeweiligen Funktion ausgeführt wird. Die Logistikeinheit 30 und/oder Abschnittssteuerungseinheiten 40 und/oder Segmentregler 50 können auch eine integrierte Schaltung umfassen, beispielsweise eine anwendungsspezifische integrierte Schaltung (ASIC) oder ein Field Programmable Gate Array (FPGA), auch mit einem Mikroprozessor. Die Logistikeinheit 30 und/oder Abschnittssteuerungseinheiten 40 und/oder Segmentregler 50 können aber auch einen analogen Schaltkreis oder analogen Computer umfassen. Auch Mischformen sind denkbar. Ebenso ist es möglich, dass verschiedene Funktionen auf derselben Hardware implementiert sind

## Patentansprüche

1. Elektromagnetisches Transportsystem (1) umfassend eine Anzahl Transporteinheiten (2), welche entlang einer Transportstrecke (3) bewegbar angeordnet sind, wobei entlang der Transportstrecke (3) Antriebsspulen (S) angeordnet sind und an den Transporteinheiten (2) Antriebsmagnete (M) angeordnet sind,
wobei die Transportstrecke (3) in Transportabschnitte (4) eingeteilt ist und die Transportabschnitte (4) jeweils mindestens ein Transportsegment (5) umfassen, wobei den Transportabschnitten (4) jeweils eine Abschnittssteuerungseinheit (40) zugeordnet ist und den Transportsegmenten (5) jeweils ein Segmentregler (50) zugeordnet ist, **dadurch gekennzeichnet, dass**
eine Logistikeinheit (30) vorgesehen ist, welche über ein Logistiknetzwerk (34) mit den Abschnittssteuerungseinheiten (40) verbunden ist, und ausgestaltet ist, den Abschnittssteuerungseinheiten (40) über das Logistiknetzwerk (34) ein Ziel (Z) der Anzahl Transporteinheiten (2) vorzugeben,
**dass** die Abschnittssteuerungseinheiten (40) der Transportabschnitte (4) über ein Segmentnetzwerk (45) mit den Segmentreglern (50) der zugehörigen Transportsegmente (5) verbunden und ausgestaltet sind,
- aus dem Ziel (Z) für den zugehörigen (4) Transportabschnitt einen Bahnabschnitt (BA) für die im zugehörigen Transportabschnitt (4) befindlichen Transporteinheiten (2) zu ermitteln, wobei ein Bahnabschnitt (BA) eine allgemeine Route von einem aktuellen Standort der Transporteinheiten (2) zu einer Übergabeposition zwischen benachbarten Transportabschnitten (4) beschreibt, sofern das Ziel (Z) außerhalb des Transportabschnitts (4) liegt, oder dem Ziel (Z) beschreibt, sofern das Ziel (Z) innerhalb des Transportabschnitts (4) liegt,
- unter Verwendung des Bahnabschnitts (BA) Sollwerte (sw) für die im zugehörigen Transportabschnitt (4) befindlichen Transporteinheiten (2) zu ermitteln
- und die Sollwerte (sw) über das Segmentnetzwerk (45) an die zugehörigen Segmentregler (50) zu übermitteln
**und dass** die Segmentregler (50) ausgestaltet sind, unter Verwendung der Sollwerte (sw) und auftretender Istwerte (iw) die Antriebsspulen zu bestromen, um ein mit den Antriebsmagneten (M) der Transporteinheiten (2) wechselwirkendes Magnetfeld zu erzeugen, um die Anzahl Transporteinheiten (2) zu bewegen.

2. Elektromagnetisches Transportsystem (1) nach Anspruch 1, **dadurch gekennzeichnet, dass** an den Transportsegmenten (5) Sensoren vorgesehen sind, um die Istwerte (iw) zu erfassen.

3. Elektromagnetisches Transportsystem (1) nach Anspruch 1 oder 2, **dadurch gekennzeichnet, dass** die Istwerte (iw) Ist-Ströme und/oder Ist-Kräfte und/oder Ist-Positionen und/oder Ist-Geschwindigkeiten und/oder Ist-Beschleunigungen umfassen **und dass** die Sollwerte (sw) Soll-Ströme und/oder Soll-Kräfte und/oder Soll-Positionen und/oder Soll-Geschwindigkeiten und/oder Soll-Beschleunigungen umfassen.

4. Elektromagnetisches Transportsystem (1) nach einem der Ansprüche 1 bis 3, **dadurch gekennzeichnet, dass** die Abschnittssteuerungseinheiten (40) über ein Abschnittsnetzwerk (44) miteinander verbunden und ausgestaltet sind, über das Abschnittsnetzwerk (44) Daten, vorzugsweise Ist-Werte (iw) zu übertragen.

5. Elektromagnetisches Transportsystem (1) nach Anspruch 4, **dadurch gekennzeichnet, dass** das Abschnittsnetzwerk (44) ein Echtzeit-Netzwerk oder ein Punkt-zu-Punkt-Netzwerk, vorzugsweise mit einstellbarer Zykluszeit, darstellt.

6. Elektromagnetisches Transportsystem (1) nach einem der Ansprüche 1 bis 5, **dadurch gekennzeichnet, dass** das Segmentnetzwerk (45) ein Echtzeit-Netzwerk, vorzugsweise mit einstellbarer Zykluszeit, darstellt.

7. Elektromagnetisches Transportsystem (1) nach einem der Ansprüche 1 bis 6, **dadurch gekennzeichnet, dass** das Logistiknetzwerk (34) ein nicht-echtzeitfähiges Netzwerk, vorzugsweise ein Ethernet-Netzwerk, ist.

8. Elektromagnetisches Transportsystem (1) nach einem der Ansprüche 1 bis 7, **dadurch gekennzeichnet, dass** benachbarte Transportsegmente (5) überlappend ausgeführt sind.

9. Elektromagnetisches Transportsystem nach einem der Ansprüche 1 bis 8, **dadurch gekennzeichnet, dass** die Transportabschnitte (4) jeweils zweidimensional und/oder eindimensional ausgeführt sind.

10. Verfahren zur Steuerung der Bewegung einer Anzahl Transporteinheiten (2), welche entlang einer Transportstrecke (3) eines elektromagnetischen Transportsystems (1) bewegbar angeordnet sind, wobei die Transportstrecke (3) in Transportabschnitte (4) eingeteilt ist und die Transportabschnitte (4) jeweils mindestens ein Transportsegment (5) umfassen, **dadurch gekennzeichnet, dass** den Transportabschnitten (4) zugeordneten Abschnittssteuerungseinheiten (40) von einer Logistikeinheit (30) über ein Logistiknetzwerk (34) jeweils ein Ziel (Z) der Anzahl Transporteinheiten (2) vorgegeben wird, dass die Abschnittssteuerungseinheiten (40) für die Anzahl Transporteinheiten (2) aus dem zugehörigen Ziel (Z) für den jeweils zugeordneten Transportabschnitt jeweils einen Bahnabschnitt (BA) für die im zugeordneten Transportabschnitt (4) befindlichen Transporteinheiten (2) ermitteln, wobei ein Bahnabschnitt (BA) eine allgemeine Route von einem aktuellen Standort der jeweiligen Transporteinheit (2) zu einer Übergabeposition zwischen benachbarten Transportabschnitten (4) beschreibt, sofern das Ziel (Z) außerhalb des Transportabschnitts (4) liegt, oder dem Ziel (Z) beschreibt, sofern das Ziel (Z) innerhalb des Transportabschnitts (4) liegt, aus den Bahnabschnitten (BA) Sollwerte (sw) für die im zugeordneten Transportabschnitt (4) befindlichen Transporteinheiten (2) ermitteln und diese über ein Segmentnetzwerk (45) an Segmentregler (50) der zugehörigen Segmente (5) übermitteln, **und dass** die Segmentregler (50) unter Verwendung der Sollwerte (sw) und bekannter Istwerte (iw) Antriebsspulen (S) des Transportsegments (5) bestromen, um ein mit Antriebsmagneten (M) der Transporteinheiten (2) wechselwirkendes Magnetfeld zu erzeugen, um die Anzahl Transporteinheiten (2) zu bewegen.

11. Verfahren nach Anspruch 10, **dadurch gekennzeichnet, dass** die Abschnittssteuerungseinheiten (4) über ein Abschnittsnetzwerk (44) Daten austauschen.

12. Verfahren nach Anspruch 11, **dadurch gekennzeichnet, dass** Segmentregler (50) über das Segmentnetzwerk (45) Istwerte (iw) an die Abschnittssteuerungseinheiten (4) übermitteln, **und dass** die Abschnittssteuerungseinheiten (4) über ein Abschnittsnetzwerk (44) Istwerte (iw) übermitteln.

13. Verfahren nach einem der Ansprüche 10 bis 12, **dadurch gekennzeichnet, dass** Bahnabschnitte (BA) benachbarter Transportabschnitte (4) eine stetige Position und/oder Geschwindigkeit und/oder Beschleunigung der Transporteinheit (2) aufweisen.

14. Verfahren nach einem der Ansprüche 10 bis 13, **dadurch gekennzeichnet, dass** die Segmentregler (50) Betriebsparameter und/oder Betriebsdaten an die zugehörigen Abschnittssteuerungseinheiten (40) übermitteln.

15. Verfahren nach Anspruch 14, **dadurch gekennzeichnet, dass** die Abschnittssteuerungseinheiten (40) die Betriebsparameter und/oder Betriebsdaten an die Logistikeinheit (30) übermitteln.

16. Verfahren nach einem der Ansprüche 10 bis 15, **dadurch gekennzeichnet, dass** die Abschnittssteuerungseinheiten (40) die Sollwerte (sw) unter Einhaltung von vorgegebenen Maximalwerten ermitteln.

## Claims

1. Electromagnetic transport system (1) comprising a number of transport units (2) which are movably arranged along a transport route (3), wherein drive coils (S) are arranged along the transport route (3) and drive magnets (M) are arranged on the transport units (2),
wherein the transport route (3) is divided into transport sections (4) and the transport sections (4) each comprise at least one transport segment (5), with each of the transport sections (4) being assigned a section control unit (40) and with each transport segment (5) being assigned a segment controller (50), **characterized in that**
a logistics unit (30) is provided, which is connected to the section control units (40) via a logistics network (34), and is designed to specify a destination (Z) of the number of transport units (2) to the section control units (40) via the logistics network (34),
**in that** the section control units (40) of the transport sections (4) are connected to the segment controllers (50) of the associated transport segments (5) via a segment network (45) and are designed
- to determine a track section (BA) for the transport units (2) located in the associated transport section (4) from the destination (Z) for the associated transport section (4), wherein the track section (BA) describes a general route from a current location of the transport units (2) to a transfer position between adjacent transport sections (4), if the destination (Z) is outside the transport section (4), or describes the destination (Z), if the destination (Z) is inside the transport section (4),
- to determine target values (sw) for the transport units (2) located in the associated transport section (4) using the track section (BA),
- and to transmit the target values (sw) to the associated segment controllers (50) via the segment network (45)
**and in that** the segment controllers (50) are designed to supply current to the drive coils using the target values (sw) and occurring actual values (iw) to generate a magnetic field which interacts with drive magnets (M) of the transport units (2) to move the number of transport units (2).

2. The electromagnetic transport system (1) according to claim 1, **characterized in that** sensors are provided on the transport segments (5) to detect the actual values (iw).

3. The electromagnetic transport system (1) according to claim 1 or 2, **characterized in that** the actual values (iw) comprise actual currents and/or actual forces and/or actual positions and/or actual speeds and/or actual accelerations **and in that** the target values (sw) comprise target currents and/or target forces and/or target positions and/or target speeds and/or target accelerations.

4. The electromagnetic transport system (1) according to any of the claims 1 to 3, **characterized in that** the section control units (40) are connected to one another via a section network (44) and are designed to transmit data, preferably actual values (iw), via the section network (44).

5. The electromagnetic transport system (1) according to claim 4, **characterized in that** the section network (44) represents a real-time network or a point-to-point network, preferably with an adjustable cycle time.

6. The electromagnetic transport system (1) according to any of the claims 1 to 5, **characterized in that** the segment network (45) represents a real-time network, preferably with an adjustable cycle time.

7. The electromagnetic transport system (1) according to any of the claims 1 to 6, **characterized in that** the logistics network (34) is a non-real time-capable network, preferably an Ethernet network.

8. The electromagnetic transport system (1) according to any of the claims 1 to 7, **characterized in that** adjacent transport segments (5) are designed to overlap.

9. The electromagnetic transport system according to any of the claims 1 to 8, **characterized in that** the transport sections (4) are each designed two-dimensionally and/or one-dimensionally.

10. A method for controlling the movement of a number of transport units (2) which are arranged movably along a transport route (3) of an electromagnetic transport system (1), wherein the transport route (3) is divided into transport sections (4) and the transport sections (4) each comprise at least one transport segment (5), **characterized in that** a destination (Z) of the number of transport units (2) is provided to each of the section control units (40), which are assigned to the transport sections (4), by a logistics unit (30) via a logistics network (34), **in that** the section control units (40) for the number of transport units (2) determine a track section (BA) for the transport units (2) located in the assigned transport section (4) in each case from the associated destination (Z), wherein the track section (BA) describes a general route from a current location of the respective transport unit (2) to a transfer position between adjacent transport sections (4), if the destination (Z) is outside the transport section (4), or describes the destination (Z), if the destination (Z) is inside the transport section (4),
determine target values (sw) for the transport units (2) located in the associated transport section (4) from the track sections (BA) and
transmit them via a segment network (45) to segment controllers (50) of the associated segments (5),
**and in that** the segment controllers (50) supply current to drive coils (S) of the transport segment (5) using the target values (sw) and known actual values (iw) to generate a magnetic field which interacts with drive magnets (M) of the transport units (2) to move the number of transport units (2).

11. The method according to claim 10, **characterized in that** the section control units (4) exchange data via a section network (44).

12. The method according to claim 11, **characterized in that** segment controllers (50) transmit actual values (iw) to the section control units (40) via the segment network (45), **and in that** the section control units (40) transmit actual values (iw) via a section network (44).

13. The method according to any of the claims 10 to 12, **characterized in that** track sections (BA) of adjacent transport sections (4) have a continuous position and/or speed and/or acceleration of the transport unit (2).

14. The method according to any of the claims 10 to 13, **characterized in that** the segment controllers (50) transmit operating parameters and/or operating data to the associated section control units (40).

15. The method according to claim 14, **characterized in that** the section control units (40) transmit the operating parameters and/or operating data to the logistics unit (30).

16. The method according to any of the claims 10 to 15, **characterized in that** the section control units (40) determine the target values (sw) while maintaining specified maximum values.

## Revendications

1. Système de transport électromagnétique (1), comprenant un certain nombre d'unités de transport (2) qui sont agencées de manière mobile le long d'une voie de transport (3), dans lequel des bobines d'entraînement (S) sont agencées le long de la voie de transport (3), et des aimants d'entraînement (M) sont agencés sur les unités de transport (2),
dans lequel la voie de transport (3) est divisée en sections de transport (4) et les sections de transport (4) comprennent respectivement au moins un segment de transport (5), dans lequel respectivement une unité de commande de section (40) est associée aux sections de transport (4), et respectivement un régulateur de segment (50) est associé aux segments de transport (5),
**caractérisé en ce qu'**une unité logistique (30) est prévue qui est reliée aux unités de commande de section (40) par l'intermédiaire d'un réseau logistique (34), et qui est configurée pour spécifier aux unités de commande de section (40) une destination (Z) du nombre d'unités de transport (2) par l'intermédiaire du réseau logistique (34),
**en ce que** les unités de commande de section (40) des sections de transport (4) sont reliées par l'intermédiaire d'un réseau de segments (45) aux régulateurs de segment (50) des segments de transport (5) associés et sont configurées
- pour établir à partir de la destination (Z) pour la section de transport (4) associée une section de trajectoire (BA) pour les unités de transport (2) se trouvant dans la section de transport (4) associée, dans lequel une section de trajectoire (BA) décrit un itinéraire général d'un emplacement actuel des unités de transport (2) jusqu'à une position de transfert entre des sections de transport (4) voisines dans la mesure où la destination (Z) est située à l'extérieur de la section de transport (4), ou décrit la destination (Z) dans la mesure où la destination (Z) se situe à l'intérieur de la section de transport (4),
- pour établir des valeurs de consigne (sw) pour les unités de transport (2) se trouvant dans la section de transport (4) associée en utilisant la section de trajectoire (BA),
- et pour transmettre les valeurs de consigne (sw) par l'intermédiaire du réseau de segments (45) aux régulateurs de segment (50) associés,
et **en ce que** les régulateurs de segment (50) sont configurés pour alimenter en courant les bobines d'entraînement en utilisant les valeurs de consigne (sw) et des valeurs réelles (iw) qui apparaissent afin de générer un champ magnétique interagissant avec les aimants d'entraînement (M) des unités de transport (2) afin de déplacer le nombre d'unités de transport (2).

2. Système de transport électromagnétique (1) selon la revendication 1, **caractérisé en ce que** des capteurs sont prévus sur les segments de transport (5) afin de détecter les valeurs réelles (iw).

3. Système de transport électromagnétique (1) selon la revendication 1 ou 2, **caractérisé en ce que** les valeurs réelles (iw) comprennent des courants réels et/ou des forces réelles et/ou des positions réelles et/ou des vitesses réelles et/ou des accélérations réelles, et **en ce que** les valeurs de consigne (sw) comprennent des courants de consigne et/ou des forces de consigne et/ou des positions de consigne et/ou des vitesses de consigne et/ou des accélérations de consigne.

4. Système de transport électromagnétique (1) selon l'une quelconque des revendications 1 à 3, **caractérisé en ce que** les unités de commande de section (40) sont reliées les unes aux autres par l'intermédiaire d'un réseau de sections (44) et sont configurées pour transmettre des données, de préférence des valeurs réelles (iw), par l'intermédiaire du réseau de sections (44) .

5. Système de transport électromagnétique (1) selon la revendication 4, **caractérisé en ce que** le réseau de sections (44) représente un réseau en temps réel ou un réseau de point à point, de préférence avec un temps de cycle réglable.

6. Système de transport électromagnétique (1) selon l'une quelconque des revendications 1 à 5, **caractérisé en ce que** le réseau de segments (45) représente un réseau en temps réel, de préférence avec un temps de cycle réglable.

7. Système de transport électromagnétique (1) selon l'une quelconque des revendications 1 à 6, **caractérisé en ce que** le réseau logistique (34) est un réseau non compatible en temps réel, de préférence un réseau Ethernet.

8. Système de transport électromagnétique (1) selon l'une quelconque des revendications 1 à 7, **caractérisé en ce que** des segments de transport voisins (5) sont réalisés en se chevauchant.

9. Système de transport électromagnétique selon l'une quelconque des revendications 1 à 8, **caractérisé en ce que** les sections de transport (4) sont réalisées respectivement de manière bidimensionnelle et/ou unidimensionnelle.

10. Procédé permettant de commander le mouvement d'un certain nombre d'unités de transport (2) qui sont agencées de manière mobile le long d'une voie de transport (3) d'un système de transport électromagnétique (1), dans lequel la voie de transport (3) est divisée en sections de transport (4), et les sections de transport (4) comprennent respectivement au moins un segment de transport (5),
**caractérisé en ce qu'**une unité logistique (30) spécifie par l'intermédiaire d'un réseau logistique (34) pour des unités de commande de section (40) associées à des sections de transport (4) respectivement une destination (Z) du nombre d'unités de transport (2), **en ce que** les unités de commande de section (40) établissent pour le nombre d'unités de transport (2) à partir de la destination (Z) associée pour la section de transport respectivement associée respectivement une section de trajectoire (BA) pour les unités de transport (2) se trouvant dans la section de transport (4) associée, dans lequel une section de trajectoire (BA) décrit un itinéraire général d'un emplacement actuel de l'unité de transport (2) respective à une position de transfert entre des sections de transport (4) voisines dans la mesure où la destination (Z) se trouve à l'extérieur de la section de transport (4), ou décrit la destination (Z) dans la mesure où la destination (Z) se trouve à l'intérieur de la section de transport (4), qu'elles établissent à partir des sections de trajectoire (BA) des valeurs de consigne (sw) pour les unités de transport (2) se trouvant dans la section de transport (4) associée et les transmettent par un réseau de segments (45) à des régulateurs de segment (50) des segments (5) associés, et **en ce que** les régulateurs de segment (50), en utilisant les valeurs de consigne (sw) et des valeurs réelles connues (iw), alimentent en courant des bobines d'entraînement (S) du segment de transport (5) pour générer un champ magnétique interagissant avec des aimants d'entraînement (M) des unités de transport (2) afin de déplacer le nombre d'unités de transport (2).

11. Procédé selon la revendication 10, **caractérisé en ce que** les unités de commande de section (4) échangent des données par l'intermédiaire d'un réseau de sections (44) .

12. Procédé selon la revendication 11, **caractérisé en ce que** les régulateurs de segment (50) transmettent par l'intermédiaire du réseau de segments (45) des valeurs réelles (iw) aux unités de commande de section (4), et **en ce que** les unités de commande de section (4) transmettent des valeurs réelles (iw) par l'intermédiaire d'un réseau de sections (44).

13. Procédé selon l'une quelconque des revendications 10 à 12, **caractérisé en ce que** des sections de trajectoire (BA) de sections de transport (4) voisines présentent une position et/ou une vitesse et/ou une accélération constante(s) de l'unité de transport (2).

14. Procédé selon l'une quelconque des revendications 10 à 13, **caractérisé en ce que** les régulateurs de segment (50) transmettent des paramètres de fonctionnement et/ou des données de fonctionnement aux unités de commande de section (40) associées.

15. Procédé selon la revendication 14, **caractérisé en ce que** les unités de commande de section (40) transmettent les paramètres de fonctionnement et/ou les données de fonctionnement à l'unité logistique (30).

16. Procédé selon l'une quelconque des revendications 10 à 15, **caractérisé en ce que** les unités de commande de section (40) établissent les valeurs de consigne (sw) en respectant des valeurs maximales prédéfinies.
